**Europäisches Patentamt**

**European Patent Office**

**Office européen des brevets**

(19)

(11) Veröffentlichungsnummer : **0 385 197 B1**

(12)

# EUROPÄISCHE PATENTSCHRIFT

(45) Veröffentlichungstag der Patentschrift :
**25.03.92 Patentblatt 92/13**

(51) Int. Cl.$^5$ : **B60J 5/04**

(21) Anmeldenummer : **90102996.7**

(22) Anmeldetag : **16.02.90**

(54) **Fahrzeugtüre.**

(30) Priorität : **03.03.89 DE 3907175**

(43) Veröffentlichungstag der Anmeldung :
**05.09.90 Patentblatt 90/36**

(45) Bekanntmachung des Hinweises auf die
Patenterteilung :
**25.03.92 Patentblatt 92/13**

(84) Benannte Vertragsstaaten :
**DE ES FR GB IT SE**

(56) Entgegenhaltungen :
**DE-A- 2 417 192**
**DE-A- 3 151 861**
**DE-A- 3 317 341**
**DE-A- 3 718 767**

(73) Patentinhaber : **AUDI AG**
**Auto-Union-Strasse 1 Postfach 220**
**W-8070 Ingolstadt (DE)**

(72) Erfinder : **Muselmann, Walter**
**Annette Kolb Strasse 57**
**W-8070 Ingolstadt (DE)**

(74) Vertreter : **Engelhardt, Harald**
**AUDI AG Patentabteilung Postfach 220**
**W-8070 Ingolstadt (DE)**

**Beschreibung**

Die Erfindung bezieht sich auf eine Fahrzeugtüre gemäß dem Oberbegriff des Patentanspruchs 1.

Fahrzeugtüren, welche einen als Vormontagegruppe ausgebildeten Aggregateträger umfassen, werden zunehmend im Fahrzeugbau eingesetzt. Der Aggregateträger kann dabei bereits die Fensterführungen, die Scheibe und einen Scheibenhebemechanismus mit einer etwa senkrechten Fensterheberschiene umfassen. Durch eine derartige Vormontage lassen sich teuere Zeiten am Endmontageband einsparen. Der vormontierte Aggregateträger muß dann nur noch in den meist als zweischalige Blechkonstruktion ausgeführten Türkörper eingesetzt und mit diesem in der richtigen Position verschraubt werden.

Neben dem Aspekt einer kostengünstigen Montage der Fahrzeugtüre gewinnt zunehmend auch die Erhöhung der Seitenaufprallfestigkeit an Bedeutung. Um zu verhindern, daß bei einem Seitenaufprall die Fahrzeugtüre ohne große Verformungsarbeit in den Fahrgastraum gedrückt wird, hat man bereits die Türschweller formschlüssig hintergreifende Fahrzeugtüren vorgeschlagen. Dadurch wirkt die Fahrzeugtüre als Zugstrebe, wenn der Seitenaufprall in einer Höhe über den Türschwellern erfolgt.

Neben der aus der DE-A-31 51 861 bekannten Ausgestaltung ist es auch bekannt, im unteren Bereich des Türkörpers einen zum Eintritt der Scheibe nach oben offenen Längsträger vorzusehen und diesen so auszugestalten, daß sich die oberen Ränder des Längsträgers bei einem Seitenaufprall verhaken und dadurch einen geschlossenen Profilträger ergeben (DE-A-24 17 192).

Der Erfindung liegt die Aufgabe zugrunde, die Seitenaufprallfestigkeit einer Fahrzeugtüre zu erhöhen, ohne deren Aufbau zu verändern.

Die Aufgabe wird durch die kennzeichnenden Merkmale des Patentanspruchs 1 gelöst.

Dadurch, daß im unteren Endbereich der Fensterheberschiene ein zum Innenraum des Fahrzeuges gerichteter Ansatz angeformt ist, welcher bei einem Seitenaufprall in eine Aussparung in dem dem Ansatz gegenüberliegenden Abschnitt des Türkörpers eingreift, wird eine Zugstrebe geschaffen, welche die Seitenaufprallfestigkeit der Fahrzeugtüre wesentlich erhöht. Der Ansatz an der Fensterheberschiene kann einstückig an derselben angeformt sein, so daß kein zusätzliches Bauteil notwendig ist. Die den Ansatz bei einem Seitenaufprall aufnehmende Aussparung ist so angeordnet und bemessen, daß auf jeden Fall sichergestellt ist, daß unabhängig von den Bautoleranzen und der gewählten Einstellung der Fensterheberschiene bzw. des Aggregateträgers der Ansatz zuverlässig in die Aussparung eingreift.

Vorteilhaft wird der Ansatz hakenförmig ausgebildet. Eine solche hakenförmige Ausgestaltung kann beispielsweise durch eine entsprechende Abstellung des Endbereichs der Fensterheberschiene erfolgen. Als weitere Möglichkeit bietet es sich oft an, ein im Endbereich der Fensterheberschiene befestigtes Halteblech (beispielsweise zur Aufnahme einer Umlenkrolle für einen Seilfensterheber) zu verlängern und daraus den hakenförmigen Ansatz zum Eingriff in die Aussparung auszubilden. Schließlich kann der Ansatz auch durch ein separates Teil gebildet sein, welches in geeigneter Weise im Endbereich der Fensterheberschiene zu befestigen ist.

In besonders einfacher Weise läßt sich die Aussparung durch Einziehen des aus Blech hergestellten Türkörpers herstellen. Die aus Blech gebildeten Türkörper sind üblicherweise mit einer Vielzahl von Aussparungen versehen und werden durch Pressen hergestellt. Während der beiden genannten Vorgänge läßt sich ohne weiteres auch die Aussparung herstellen, in welche bei einem Seitenaufprall der Ansatz an der Fensterheberschiene eingreifen soll.

Sowohl beim Anbringen des Ansatzes, als auch bei der Ausgestaltung der Aussparung sollte darauf geachtet werden, daß alle Übergänge mit entsprechenden Radien versehen sind, um bei der aufprallbedingten Belastung die Kerb- und Schneidwirkung zu reduzieren.

Um die Fensterheberschiene in der gewünschten Weise als Zugstrebe bei einem Seitenaufprall wirksam werden zu lassen, ist es neben einer sicheren Verhakung des unteren Endbereichs der Fensterheberschiene natürlich auch notwendig, daß der obere Bereich der Fensterschiene in gleicher Weise stabil mit dem Aggregateträger verbunden ist. Der Aggregateträger selbst ist ohnehin fest mit dem Türkörper verschraubt.

Eine ähnliche Ausgestaltung wie im unteren Endbereich der Fensterheberschiene, bei der ein Ansatz an der Fensterheberschiene bei einem Seitenaufprall mit einer Aussparung im Türkörper verhakt, läßt sich auch im oberen Endbereich der Fensterheberschiene realisieren. Diese Ausgestaltung bietet sich jedoch vornehmlich nur dann an, wenn der den oberen Bereich der Fensterheberschiene haltende Aggregateträger aufgrund seiner baulichen Ausgestaltung bzw. seiner Befestigung weniger gut geeignet ist, die auftretenden Kräfte in den Türkörper zu übertragen.

Ein Ausführungsbeispiel der Erfindung ist in der Zeichnung dargestellt und wird nachfolgend näher beschrieben. Es zeigt

Fig. 1 in perspektivischer Darstellung einen Personenkraftwagen mit einer einen Aggregateträger und eine etwa senkrechte Fensterheberschiene umfassenden Fahrzeugtüre,

Fig. 2 den vollständig vormontierten Aggregateträger gemäß Fig. 1,

Fig. 3 in Explosionsdarstellung den Aggregateträger aus Fig. 2 und den zur Aufnahme des Aggregateträgers vorgesehenen Türkörper und

Fig. 4 einen schematischen Schnitt durch den unteren Bereich des Türkörpers mit montiertem Aggregateträger.

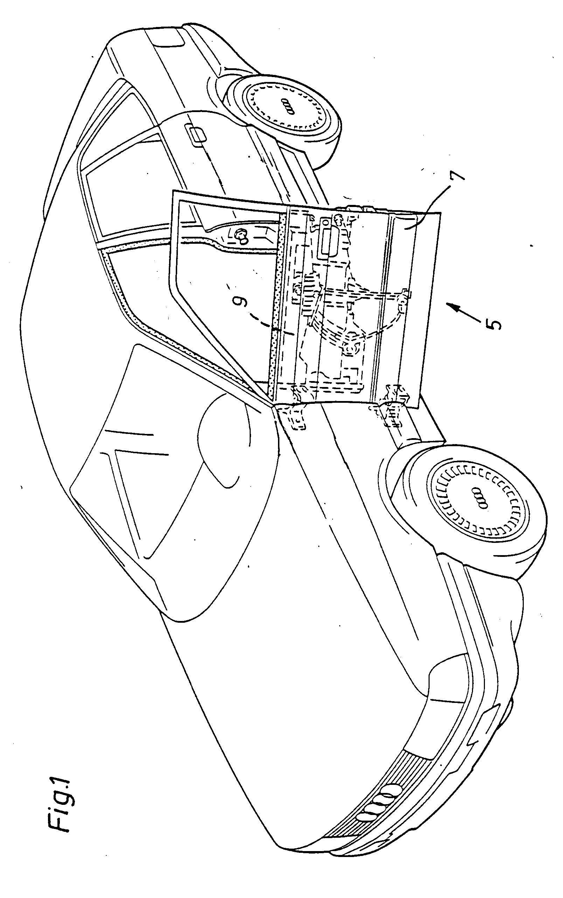

Fig. 1 zeigt einen Personenkraftwagen mit einer Fahrzeugtüre 5, welche im wesentlichen durch einen Türkörper 7 und einen vormontierten Aggregateträger 9 zusammengesetzt ist.

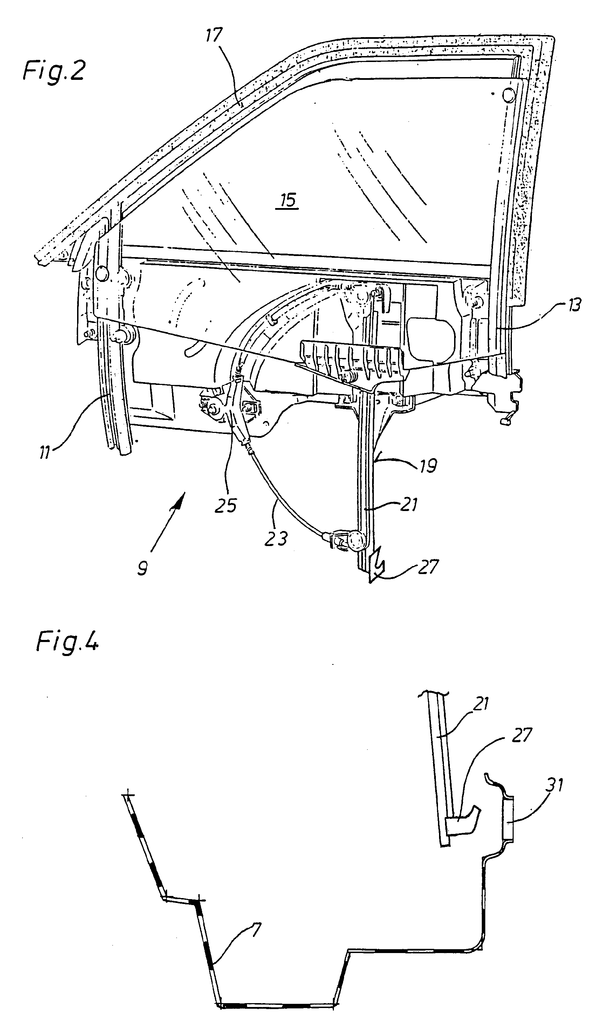

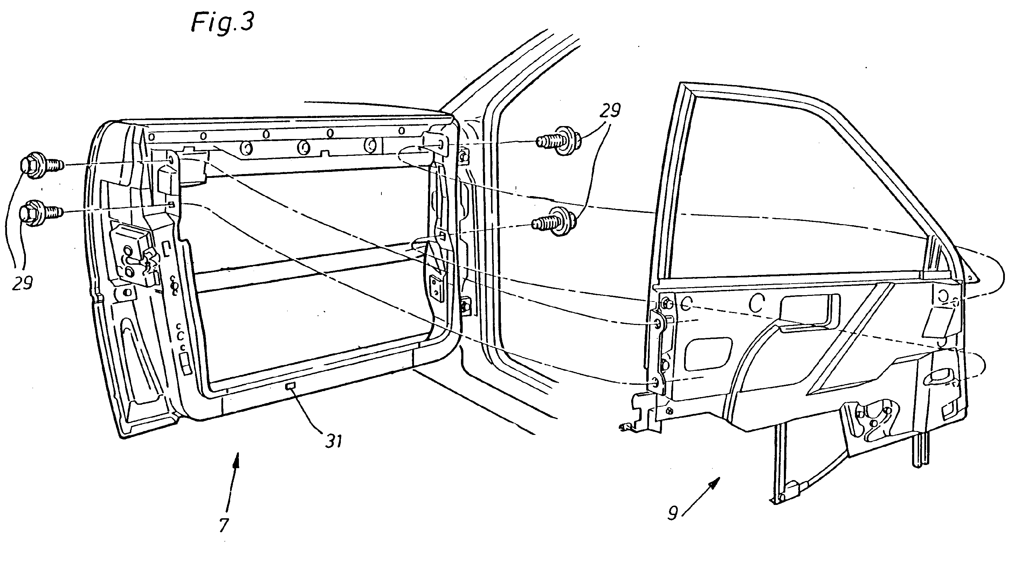

Der Aggregateträger 9 als vollständig vormontierte Baugruppe ist in Fig. 2 dargestellt. Als wesentliche Bauteile sind an dem Aggregateträger 9 Führungsschienen 11 und 13 für eine Scheibe 15, ein Scheibenrahmen 17 und ein Fensterheber 19 befestigt. Die Hauptbestandteile des Fensterhebers 19 sind eine Fensterheberschiene 21, ein Seilzug 23 sowie eine Antriebsvorrichtung 25. Wie die Fig. 2 deutlich zeigt, ist im unteren Endbereich der Fensterheberschiene 21 ein hakenförmiger Ansatz 27 angeformt, dessen Funktion später näher erläutert wird.

Der Aggregateträger 9 wird in der in Fig. 2 gezeigten Weise vormontiert und anschließend in den Türkörper 7 eingefügt (Fig. 3). Die Befestigung des Aggregateträgers 9 im Türkörper 7 erfolgt nur durch vier Schrauben 29. Da die Schrauben 29 mit vergrößerten Aussparungen in den entsprechenden Bauteilen zusammenwirken, läßt sich eine Einstellung des Aggregateträgers 9 zum Türkörper 7 bzw. zu den sich an den Scheibenrahmen 17 und der Führungsschiene 13 anschließenden Karosserieabschnitten vornehmen. Im unteren Abschnitt des Türkörpers 7 ist eine Aussparung 31 vorgesehen, welche bei montiertem Aggregateträger 9 dem Ansatz 27 an der Fensterheberschiene 21 gegenüberliegt.

Fig. 4 zeigt einen Schnitt durch den unteren Abschnitt des Türkörpers 7 im Bereich der Aussparung 31. Der Aussparung 31 gegenüberliegend ist der an der Fensterheberschiene 21 angeformte Ansatz 27. Bei einem Seitenaufprall ab einer bestimmten Größenordnung wird die Außenwandung des Türkörpers 7 eingedrückt und legt sich unter anderem an der Fensterheberschiene 21 an. Diese wird dadurch in Richtung auf den Fahrgastraum zu bewegt. Während dieser Bewegung kommt der hakenförmig ausgebildete Ansatz 27 in Eingriff mit der Aussparung 31. Durch diese Verhakung wird erreicht, daß die Fensterheberschiene 21, welche natürlich auch im Bereich des Aggregateträgers 9 befestigt ist, als Zugstrebe wirkt und dadurch der einwirkenden Kraft einen größeren Widerstand entgegensetzt.

## Patentansprüche

1. Fahrzeugtüre, umfassend einen als Vormontagegruppe ausgebildeten Aggregateträger (9), welcher gegenüber einem den Aggregateträger tragenden Türkörper (7) einstellbar ist und welcher eine etwa senkrechte Fensterheberschiene (21) für eine in der Fahrzeugtüre versenkbare Scheibe (15) aufnimmt, dadurch gekennzeichnet, daß im unteren Endbereich der Fensterheberschiene (21) ein zum Innenraum des Fahrzeuges gerichteter Ansatz (27) angeformt ist, und daß in dem den Ansatz (27) gegenüberliegenden Abschnitt des Türkörpers (7) eine Aussparung (31) vorgesehen ist, derart, daß unabhängig von der toleranz- und/oder einstellbedingten Lage der Fensterheberschiene (21) ein Eingreifen des Ansatzes (27) in die Aussparung (31) bei einer seitenaufprallbedingten Verschiebung der Fensterheberschiene (21) gewährleistet ist.

2. Fahrzeugtüre nach Anspruch 1, dadurch gekennzeichnet, daß der Ansatz (27) hakenförmig ausgebildet ist.

3. Fahrzeugtüre nach Anspruch 1 oder 2, dadurch gekennzeichnet, daß die Aussparung (31) durch Einziehen des aus Blech hergestellten Türkörpers (7) gebildet ist.

## Claims

1. Vehicle door, comprising a unit carrier (9) constructed as a premounted group, which carrier can be adjusted with respect to a door body (7) bearing the unit carrier and which receives an approximately vertical window raising rail (21) for a window pane (15) which can be lowered in the vehicle door, characterised in that an extension (27) pointing towards the passenger compartment of the vehicle is formed in the lower end region of the window raising rail (21), and in that, in the section of the door body (7) lying opposite the extension (27), a recess (31) is provided in such a way that engagement of the extension (27) in the recess (31) in the event of a displacement of the window raising rail (21) due to a lateral impact is ensured independently of the tolerance-conditioned and/or adjustment-conditioned position of the window raising rail (21).

2. Vehicle door according to Claim 1, characterised in that the extension (27) is of hook-shaped construction.

3. Vehicle door according to Claim 1 or 2, characterised in that the recess (31) is formed by drawing in the door body (7) manufactured from sheet metal.

**Revendications**

1. Porte de véhicule automobile, comprenant un support d'équipement de porte (9) qui est réalisé sous forme de sous-ensemble pré-monté, est réglable par rapport à un corps de porté (7) sur lequel est monté ledit support, et reçoit un rail de lève-vitre (21) à peu près vertical pour une glace (15) abaissable dans la porte de véhicule, caractérisée en ce qu'il est formé, dans la région d'extrémité inférieure du rail de lève-vitre (21), une saillie (27) dirigée vers l'intérieur du véhicule, et en ce qu'un évidement (31) est prévu dans la partie du corps de porte (7) opposée à cette saillie (27), de telle sorte que quelle que soit la position du rail de lève-vitre (21), déterminée par les tolérances de fabrication et/ou par le réglage, une pénétration de la saillie (27) dans l'évidement (31) soit assurée en cas de déplacement du rail de lève-vitre (21) dû à un choc latéral.

2. Porte de véhicule automobile selon la revendication 1, caractérisée en ce que la saillie (27) est réalisée en forme de crochet.

3. Porte de véhicule automobile selon la revendication 1 ou 2, caractérisée en ce que l'évidement (31) est formé par emboutissage du corps de porte (7) fabriqué en tôle.

Fig.1

*Fig.2*

*Fig.4*

6

Fig.3

29

7

29

31

7

9

EP 0 385 197 B1